# EUROPÄISCHE PATENTANMELDUNG

(11) **EP 2 977 665 A2**
(43) Veröffentlichungstag der Anmeldung: **27.01.2016**
(21) Anmeldenummer: 15173568.5
(22) Anmeldetag: 24.06.2015
(51) Int. Cl.: F16L 23/032

(54) **FLANSCHVERBINDUNGSANORDNUNG FÜR EINE KÄLTEMITTELLEITUNG UND FLANSCH**

(30) Priorität: 23.07.2014 DE 102014214426; 24.07.2014 DE 102014214537; 15.08.2014 DE 102014216290
(71) Anmelder: OBE Ohnmacht & Baumgärtner GmbH & Co. KG, 75228 Ispringen (DE)
(72) Erfinder: Heil, Bernhard, 75179 Pforzheim (DE); Schäfer, Frank, 75059 Zaisenhausen (DE)
(74) Vertreter: Gleiss, Alf-Olav

(57) **Zusammenfassung**

Die Erfindung betrifft eine Flanschverbindungsanordnung 1 für eine Kältemittelleitung, mit einem ersten Flansch 2 und einem zweiten Flansch 3, wobei der erste Flansch 2 ein erstes Material aufweist, wobei der zweite Flansch 3 ein zweites Material aufweist, wobei das erste Material und das zweite Material voneinander verschieden sind, und wobei sich das erste Material und das zweite Material insbesondere in ihrem elektrochemischen Potential derart unterscheiden, dass sie ein elektrochemisches Lokalelement miteinander bilden.

## Beschreibung

Die Erfindung betrifft eine Flanschverbindungsanordnung für eine Kältemittelleitung gemäß Anspruch 1 sowie einen Flansch für eine Verbindungsstelle in einer Kältemittelleitung gemäß Anspruch 8.

Rohrleitungssysteme von Fahrzeugklimaanlagen, insbesondere von solchen, welche mit R744 oder einem vergleichbaren Kältemittel betrieben werden, benötigen für jede Verbindung ein vorzugsweise lösbares Kupplungssystem, welches aus zwei Trägerteilen besteht. In der Regel ist das Kupplungssystem als Flanschverbindungsanordnung mit einem ersten und einem zweiten Flansch ausgebildet, insbesondere mit einem einen Zapfen aufweisenden männlichen Flansch und einem eine eingesenkte Ringnut aufweisenden weiblichen Flansch. Die Flansche sind vorzugsweise ineinandergreifend verschraubt oder auf eine andere Art miteinander verspannt. Um den hohen Dichtheitsanforderungen zu genügen, wird ferner ein Dichtelement in Form einer metallischen Scheibe oder eines Schneidrings verwendet.

Aus der deutschen Offenlegungsschrift DE 102 61 887 A1 geht eine Rohrkupplung für die lösbare Kupplung von Rohrleitungsabschnitten eines Hochdruck-Rohrleitungssystems hervor, die jeweils mit einem Kupplungsblock fest verbunden sind, von denen einer einen Kupplungszapfen und der andere für diesen eine Zapfenaufnahme aufweist, wobei die Kupplungsblöcke durch eine Spannschraube einer Seitenflanschverbindung zusammengehalten sind. Die Kupplungsblöcke bestehen bevorzugt aus einer Aluminiumlegierung.

Aus der deutschen Offenlegungsschrift DE 103 26 958 A1 ist eine Anschlusseinrichtung zur Verbindung zweier Leitungskanäle mit einer ersten Kupplungshälfte, die von einem der Leitungskanäle durchsetzt ist, mit einer zweiten Kupplungshälfte, die von dem anderen Leitungskanal durchsetzt ist, mit einer Dichtungsanordnung zwischen den Leitungskanälen, mit einer Spanneinrichtung, die in seitlichem Abstand von der Dichtungsanordnung angeordnet ist, und mit wenigstens einer zur Abstützung einer der Kupplungshälften dienenden und an der anderen Kupplungshälfte angeordneten Keilfläche bekannt, wobei die Keilfläche der Spanneinrichtung bezüglich der Dichtungsanordnung gegenüberliegend angeordnet ist. Schräg verlaufende Flächenbereiche wirken hierbei nach Art eines Keilgetriebes zusammen, welches die von einem Spannbolzen aufgebrachte Kraft in die Mittelachse des Fluidkanals oder wenigstens in einen Bereich verschiebt, der ungefähr senkrecht durch die Dichtungsanordnung führt, welche den Fluidkanal umgibt. Auch in diesem Fall sind die beiden Kupplungshälften vorzugsweise aus einer Aluminiumlegierung gebildet. Bei diesen wie bei weiteren Flanschverbindungsanordnungen verschiedenster Ausführungsformen besteht das Problem, dass beim Betrieb einer Fahrzeugklimaanlage mit dem Kältemitte R744 aufgrund der herrschenden Temperaturen und der hohen Permeabilität des Kältemittels CO₂ die flexiblen Leitungen zumindest auf der Hochdruck-/Heißgasseite nicht mehr als Elastomerschlauch, sondern als Metallschlauch ausgeführt werden müssen. Dieser Metallschlauch muss aufgrund der Lebensdauer- und Flexibilitätsanforderungen aus Stahl, insbesondere aus austenitischem, rostfreiem Stahl gefertigt werden. Die Integration dieses Werkstoffs in das aus Kosten- und Gewichtsgründen ansonsten in Aluminium oder einer Aluminiumlegierung ausgeführten Rohrleitungssystem erweist sich dergestalt als schwierig, da sowohl unter Festigkeits- als auch unter Korrosionsaspekten eine stoffschlüssige Verbindung von Aluminium oder seinen Legierungen mit austenitischem, rostfreiem Stahl deutlich geringere Anforderungen erfüllt als sortenreine stoffschlüssige Verbindungen.

Wie sich anhand der oben genannten Beispiele zeigt, werden die Flansche einer Flanschverbindungsanordnung typischerweise einheitlich aus einem gemeinsamen Material, insbesondere aus einer Aluminiumlegierung, gefertigt. Sie sind dadurch leicht und lassen sich kostengünstig, beispielsweise aus Strangpressprofilen, herstellen. Die Übergangsstelle zwischen Aluminium beziehungsweise einer Aluminiumlegierung und einer austenitischen, rostfreien Stahllegierung wird konstruktiv in die Rohrgeometrie selbst gelegt, indem beispielsweise Rohrstücke beziehungsweise Metallschläuche zum Beispiel durch eine Reibverschweißung oder eine Verpressung - mit oder ohne eingelegte Dichtung - miteinander verbunden werden. Hierbei ist ein direkter Kontakt der verschiedenen Werkstoffe unvermeidlich, wobei wegen deren stark unterschiedlicher elektrochemischer Potentiale ein Lokalelement gebildet wird, welches unter Anwesenheit eines Elektrolyten die elektrochemische Kontaktkorrosion begünstigt. Aufgrund der Positionierung einer solchen Übergangsstelle in einem Motorraum eines Kraftfahrzeugs ist eine derart ausgeführte Verbindung Spritzwasser und anderen äußeren Einflüssen wie Salz, Öl, Verunreinigungen, Partikeln, und/oder anderen entsprechenden Einflüssen ausgesetzt, die aufgrund der vergleichsweise dünnen Ausgestaltung des unedleren Partners, in diesem Falle insbesondere des drucktragenden Rohrs aus Aluminium beziehungsweise einer Aluminiumlegierung, zu vorzeitigem Ausfall des Kältemittelkreislaufs durch Undichtigkeit führen.

Der Erfindung liegt die Aufgabe zugrunde, eine Flanschverbindungsanordnung sowie einen Flansch für eine Verbindungsstelle in einer Kältemittelleitung zu schaffen, wobei die genannten Probleme nicht auftreten.

Die Aufgabe wird gelöst, indem die Gegenstände der unabhängigen Ansprüche geschaffen werden. Vorteilhafte Ausgestaltungen ergeben sich aus den abhängigen Ansprüchen.

Die Aufgabe wird insbesondere gelöst, indem eine Flanschverbindungsanordnung für eine Kältemittelleitung geschaffen wird, welche einen ersten Flansch und einen zweiten Flansch aufweist, wobei der erste Flansch ein erstes Material aufweist, und wobei der zweite Flansch ein zweites Material aufweist. Das erste Material und das zweite Material sind voneinander verschieden, wobei sich das erste und das zweite Material insbesondere in ihren elektrochemischen Potentialen derart unterscheiden, dass sie ein elektrochemisches Lokalelement miteinander bilden. Auf diese Weise wird die Verbindungsstelle von zwei verschiedenen Werkstoffen der Kältemittelleitung in die Flanschverbindungsanordnung gelegt, wobei jeder der beiden Flansche vorzugsweise stoffschlüssig mit einem ihm zugeordneten Rohr- oder Schlauchelement verbunden ist, welches dasjenige Material aufweist oder aus demjenigen Material besteht, welches auch der entsprechende Flansch aufweist. Dies hat den Vorteil, dass die Verbindungsstelle nicht mehr im Bereich der Rohrgeometrie selbst angeordnet sein muss, wobei man sie insbesondere außerhalb eines drucktragenden Bereichs legen kann, vorzugsweise in einen Bereich, wo deutlich größere Materialstärken vorliegen als in der Rohrgeometrie selbst. Diese größere Materialstärke kann nun als "Opfermaterial" für eine Verlängerung der Lebensdauer des Kältemittelkreislaufs genutzt werden, wobei auch in diesem Fall ein direkter Kontakt zwischen den beiden Werkstoffen unter konstruktiven Gesichtspunkten unvermeidlich ist. Es ergeben sich erhebliche Vorteile, wenn die verschiedenen, in dem Kältemittelkreislauf verwendeten Materialien nicht im Bereich der Rohrleitungen aufeinander stoßen, sondern vielmehr im Bereich der Flanschverbindungsanordnung, wo sie in Form von Flanschen aufeinander treffen, welche verschiedene Materialien aufweisen.

Es wird ein Ausführungsbeispiel der Flanschverbindungsanordnung bevorzugt, das sich dadurch auszeichnet, dass der erste Flansch Stahl, insbesondere rostfreien Stahl, vorzugsweise Edelstahl, besonders bevorzugt ferritischen, martensitischen oder austenitischen Stahl, insbesondere austenitischen rostfreien Stahl, aufweist, wobei der erste Flansch bevorzugt aus Stahl, insbesondere rostfreiem Stahl, bevorzugt Edelstahl, besonders bevorzugt ferritischem, martensitischem oder austenitischem, insbesondere austenitischem rostfreiem Stahl besteht. Ein derart ausgestalteter erster Flansch kann ohne weiteres und insbesondere ohne die Gefahr der Bildung eines Lokalelements an der Berührungsstelle stoffschlüssig mit einem Metallschlauch oder Metallrohr verbunden werden, welche/welches seinerseits aus Stahl, insbesondere aus ferritischem, martensitischem oder austenitischem, insbesondere austenitischem rostfreiem Stahl, gefertigt ist.

Alternativ oder zusätzlich weist der zweite Flansch bevorzugt ein Leichtmetall oder eine Leichtmetalllegierung, insbesondere Aluminium oder eine Aluminiumlegierung, auf. Bevorzugt besteht der zweite Flansch aus einem Leichtmetall oder einer Leichtmetalllegierung, insbesondere aus Aluminium oder einer Aluminiumlegierung. Es ist auch möglich, dass der zweite Flansch Magnesium oder eine Magnesiumlegierung aufweist oder aus Magnesium oder einer Magnesiumlegierung besteht. Auch andere Leichtmetalle oder Leichtmetalllegierungen sind selbstverständlich möglich. Ein derartig ausgebildeter zweiter Flansch kann ohne weiteres und insbesondere ohne die Gefahr der Ausbildung eines Lokalelements mit einem Metallrohr oder einem Metallschlauch stoffschlüssig verbunden werden, welcher/welches seinerseits aus einem Leichtmetall oder einer Leichtmetalllegierung, insbesondere aus dem gleichen Material wie der Flansch selbst, gefertigt ist.

Es wird auch ein Ausführungsbeispiel der Flanschverbindungsanordnung bevorzugt, das sich dadurch auszeichnet, dass der erste Flansch und der zweite Flansch in einem - außerhalb eines Dichtbereichs angeordneten - Kontaktbereich aneinander anliegen, wobei der Kontaktbereich einen belastungsgerecht minimierten Flächeninhalt aufweist. Auf diese Weise wird der Kontakt zwischen den beiden Materialien der Flansche auf ein belastungsgerecht gewähltes Minimum beschränkt, sodass insbesondere auch der Bereich, in dem Kontaktkorrosion auftreten kann, minimiert ist.

Der belastungsgerecht minimierte Flächeninhalt beträgt bevorzugt von mindestens 10 mm² bis höchstens 150 mm², vorzugsweise von mindestens 25 mm² bis höchstens 100 mm², vorzugsweise von mindestens 35 mm² bis höchstens 75 mm², besonders bevorzugt 50 mm². Erfindungsgemäß ist erkannt worden, dass selbst derartig kleine Kontaktflächen zwischen den Flanschen eine belastungsgerechte Flanschverbindung ermöglichen, wobei zugleich die Probleme eines sich ausbildenden Lokalelements und einer Korrosion an der Kontaktstelle durch den minimierten Flächeninhalt deutlich verringert werden.

Besonders bevorzugt weist der erste Flansch eine entsprechend minimierte Kontaktfläche mit einem entsprechenden Flächeninhalt auf. Dies bringt besondere Vorteile mit sich, wenn der erste Flansch Stahl aufweist oder aus Stahl besteht. Da es sich hierbei um das edlere Material der Flanschverbindungsanordnung handelt, welches nicht korrodiert, ist es nicht notwendig, an dem ersten Flansch entsprechendes "Opfermaterial" bereitzustellen. Daher kann die Kontaktfläche an diesem Flansch in besonders günstiger Weise minimiert werden.

Es wird ein Ausführungsbeispiel der Flanschverbindungsanordnung bevorzugt, das sich dadurch auszeichnet, dass der zweite Flansch eine erste Bohrung zur Durchleitung von Kältemittel aufweist, die mit einer ersten Bohrung des ersten Flanschs zur Durchleitung von Kältemittel fluchtet. Die beiden Flansche weisen also jeweils erste Bohrungen auf, welche miteinander fluchten, und durch welche Kältemittel durchleitbar ist.

Bevorzugt ist vorgesehen, dass der zweite Flansch eine zweite Bohrung, insbesondere eine Durchgangsbohrung oder eine Gewindebohrung, zur Aufnahme eines Befestigungsmittels, vorzugsweise einer Schraube, aufweist. Diese zweite Bohrung fluchtet mit einer zweiten Bohrung des ersten Flanschs, insbesondere einer Gewindebohrung oder einer Durchgangsbohrung, zur Aufnahme des Befestigungsmittels, vorzugsweise der Schraube. Die zweiten Bohrungen dienen demnach insbesondere zur Befestigung der beiden Flansche aneinander. Dabei ist es möglich, dass eine der beiden zweiten Bohrungen als Gewindebohrung ausgebildet ist, wobei die andere der zweiten Bohrungen als Durchgangsbohrung ausgebildet ist. Es ist dann möglich, durch die Durchgangsbohrung eine Schraube zu führen und diese in die Gewindebohrung einzuschrauben. Hierdurch können die beiden Flansche sicher und stabil aneinander befestigt werden.

Es wird auch ein Ausführungsbeispiel der Flanschverbindungsanordnung bevorzugt, das sich dadurch auszeichnet, dass er erste Flansch einen die erste Bohrung umgreifenden Vorsprung aufweist. Der Vorsprung ist vorzugsweise als Zapfen ausgebildet, sodass der erste Flansch insbesondere als männlicher Flansch ausgebildet ist. In diesem Fall weist der zweite Flansch bevorzugt eine dessen erste Bohrung umgreifende Ausnehmung auf, besonders bevorzugt eine Ringnut. Insofern ist der zweite Flansch in diesem Fall als weiblicher Flansch ausgebildet. Der Vorsprung des ersten Flanschs greift vorzugsweise in die Ausnehmung des zweiten Flanschs ein.

Alternativ ist es möglich, dass der erste Flansch eine die erste Bohrung umgreifende Ausnehmung, insbesondere eine Ringnut, aufweist, wobei der zweite Flansch einen dessen erste Bohrung umgreifenden Vorsprung aufweist. In diesem Fall greift der Vorsprung des zweiten Flanschs in die Ausnehmung des ersten Flanschs ein. Dabei ist dann der erste Flansch als weiblicher Flansch und der zweite Flansch als männlicher Flansch ausgebildet. Der Vorsprung des zweiten Flanschs ist vorzugsweise als Zapfen ausgebildet.

Mit der Verbindung eines männlichen Flanschs mit einem weiblichen Flansch kann insbesondere eine Flanschverbindungsanordnung verwirklicht werden, wie sie der geometrischen Ausgestaltung nach beispielsweise aus der deutschen Offenlegungsschrift DE 102 61 887 A1 bekannt ist. Eine solche Flanschverbindungsanordnung zeichnet sich durch eine hohe Dichtigkeit und gleichzeitig eine große Stabilität der Verbindung aus.

Es wird auch ein Ausführungsbeispiel der Flanschverbindungsanordnung bevorzugt, das sich dadurch auszeichnet, dass in der Ausnehmung, welche die erste Bohrung des ersten oder des zweiten Flanschs umgreift, ein Dichtelement angeordnet ist. Insbesondere weist die Flanschverbindungsanordnung in einem Dichtbereich bevorzugt eine Dichtungsanordnung auf, die aus mindestens einer ein Dichtelement aufnehmenden Ringnut und einer Dichtfläche des männlichen und des weiblichen Flanschs besteht, auf welche ein Dichtelement aufgelegt ist. Das Dichtelement ist vorzugsweise als Dichtring - insbesondere in Form einer Flachdichtung, bevorzugt in Form eines - im Querschnitt gesehen - rechteckförmigen Dichtrings, ausgebildet, der vorzugsweise aus einem Weichmetall besteht. Der Vorsprung des einen Flanschs und die Ausnehmung, insbesondere die Ringnut, des anderen Flanschs weisen jeweils radiale Dichtflächen auf, wobei eine solche Dichtfläche bevorzugt insbesondere an einer Stirnseite des Vorsprungs vorgesehen ist. Wenigstens eine der Dichtflächen weist bevorzugt eine umlaufende Profilierung auf, welche sich in den Dichtring einpressen kann. Besonders bevorzugt weisen beide Dichtflächen eine solche umlaufende Profilierung auf. Die Profilierung kann Ringnuten aufweisen, die zueinander konzentrisch angeordnet sind. Auch ist es möglich, dass die Profilierung schneidenförmig umlaufende, im Querschnitt gesehen dreieckförmige Rippen aufweist. Ein Dichtelement aus Weichmetall hat den Vorteil, dass es für CO₂ impermeabel ist. Eine ausreichende Dichtheit der Verbindung kann insbesondere durch Einpressen der Profilierung in das Material des Dichtelements gewährleistet werden.

Es wird auch ein Ausführungsbeispiel der Flanschverbindungsanordnung bevorzugt, das sich dadurch auszeichnet, dass zwischen dem ersten Flansch und dem zweiten Flansch in dem Kontaktbereich eine elektrisch isolierende Zwischenlage angeordnet ist. Hierdurch kann eine tatsächliche Ausbildung eines Lokalelements wirksam verhindert werden, beziehungsweise das Risiko einer entstehenden Kontaktkorrosion kann minimiert werden. Um die elektrisch isolierende Zwischenlage zu verwirklichen, weist vorzugsweise mindestens einer der Flansche an einer Kontaktfläche zu dem anderen Flansch eine elektrisch isolierende Schicht auf. Bevorzugt ist vorgesehen, dass die elektrisch isolierende Schicht als elektrisch isolierende Beschichtung ausgebildet ist. Es ist aber auch möglich, dass die elektrisch isolierende Zwischenlage als zusätzliches Bauteil zwischen den Flanschen angeordnet ist, wobei das zusätzliche Bauteil beispielsweise aus Kunststoffmaterial bestehen kann.

Bei einem bevorzugten Ausführungsbeispiel der Flanschverbindungsanordnung ist eine Spanneinrichtung vorgesehen, welche beabstandet von der Dichtungsanordnung - insbesondere zwischen dem Dichtbereich und dem Kontaktbereich - zwischen den beiden Flanschen angeordnet ist. Mittels der Spanneinrichtung wird eine druckdichte Verbindung zwischen den Flanschen, insbesondere zwischen dem männlichen Flansch und dem weiblichen Flansch, hergestellt. Es ist möglich, dass die Spanneinrichtung eine Spannschraube aufweist, es sind aber auch andere, geeignete Spanneinrichtungen denkbar.

Die der Erfindung zugrunde liegende Aufgabe wird insbesondere auch gelöst, indem ein Flansch für eine Verbindungsstelle in einer Kältemittelleitung geschaffen wird, insbesondere für eine Flanschverbindungsanordnung nach einem der zuvor genannten Ausführungsbeispiele, welcher eine erste Bohrung zur Durchleitung eines Kältemittels aufweist. An dem Flansch ist - separat von einem Dichtbereich - in einem Kontaktbereich eine Kontaktfläche zur Anlage an einem weiteren Flansch einer Flanschverbindungsanordnung ausgebildet, wobei die Kontaktfläche einen belastungsgerecht minimierten Flächeninhalt aufweist. Dadurch verwirklichen sich die bereits in Zusammenhang mit der Flanschverbindungsanordnung erwähnten Vorteile.

Bei einem bevorzugten Ausführungsbeispiel des Flanschs beträgt der Flächeninhalt der Kontaktfläche von mindestens 10 mm² bis höchstens 150 mm², vorzugsweise von mindestens 25 mm² bis höchstens 100 mm², vorzugsweise von mindestens 35 mm² bis höchstens 75 mm², besonders bevorzugt 50 mm². Es ergibt sich so eine insgesamt kleine Berührfläche zwischen den beiden Flanschen, wobei bei gleichzeitig ausreichender Festigkeit im Betrieb und bei Montage ein besonders günstiges Verhalten bezüglich Kontaktkorrosion erzielt wird.

Es wird auch ein Ausführungsbeispiel des Flanschs bevorzugt, das sich dadurch auszeichnet, dass dieser - insbesondere außerhalb eines Dichtbereichs - eine Leichtbaustruktur aufweist. Dabei kann es sich insbesondere um eine bionische Struktur, also eine bionisch optimierte Struktur, das heißt eine Struktur, welche auf der Grundlage bionischer Überlegungen und/oder Kriterien optimiert ist, handeln. Bevorzugt weist der Flansch eine profilierte Struktur oder eine Fachwerkstruktur auf. In solchen Strukturen wird in vorteilhafter Weise Material an Stellen weggenommen, an welchen es nicht zwingend vorhanden sein muss, sodass letztlich eine den Flansch stabilisierende und tragende Leichtbaustruktur entsteht, die deutlich weniger Gewicht aufweist als ein Flansch aus Vollmaterial, wobei sie zugleich hochbelastbar ist. Insbesondere eine durch bionische Überlegungen gefundene Minimalstruktur weist bevorzugt gerade so viel Material auf, wie es für eine Druckstabilität bei Montage und Betrieb des Flanschs in einer Flanschverbindungsanordnung erforderlich ist. Dies ermöglicht nicht nur eine signifikante Gewichtsersparnis gegenüber einem konventionell konstruierten Flansch, sondern auch eine Minimierung des erforderlichen Bauraums für diesen.

In diesem Zusammenhang wird insbesondere ein Ausführungsbeispiel des Flanschs bevorzugt, das sich dadurch auszeichnet, dass das Material des Flansches in höher belasteten Bereichen oder in Bereichen von Lastpfaden konzentriert ist, also in Bereichen, wo insbesondere bei Montage oder im Betrieb einer Flanschverbindungsanordnung, welcher den Flansch aufweist, erhöhte Belastungen oder Lastpfade zu erwarten sind. Vorzugsweise ist Material in wenigstens einem geringer belasteten Bereich ausgespart. Besonders bevorzugt ist vorgesehen, dass der Flansch in wenigstens einem geringer belasteten Bereich kein Material aufweist. Hierdurch können erhebliche Gewichtseinsparungen ohne Einbuße an Stabilität und Festigkeit erzielt werden. Alternativ oder zusätzlich ist vorgesehen, dass der Flansch wenigstens eine sich in einer Belastungsrichtung erstreckende Verstrebung aufweist. Dabei wird insbesondere eine geforderte Steifigkeit des Flanschs durch konstruktive Verstrebungen in den Belastungsrichtungen erreicht.

Eine Ausgestaltung des Flanschs mit einer Leichtbaustruktur nach einem der zuvor beschriebenen Ausführungsbeispiele ist insbesondere vorteilhaft in Zusammenhang mit dem belastungsgerecht minimierten Flächeninhalt der Kontaktfläche. Da nämlich in diesem Fall keine vollflächige Anlage der Flansche aneinander realisiert wird, ist eine Durchbiegung des bezüglich seiner Kontaktfläche minimierten Flanschs in einem freigestellten Bereich - insbesondere zwischen einem Dichtbereich und dem Kontaktbereich und besonders im Bereich einer Spanneinrichtung - zu befürchten. Eine solche Verbiegung kann vermieden werden, indem der Flansch eine geeignete Leichtbaustruktur mit belastungsgerecht verteiltem Material und insbesondere sich in Belastungsrichtung erstreckenden Verstrebungen aufweist. Er gewinnt dadurch eine erhöhte Steifigkeit, sodass trotz der belastungsgerecht minimierten Kontaktfläche keine Durchbiegung befürchtet werden muss.

Es wird in diesem Zusammenhang insbesondere ein Ausführungsbeispiel des Flanschs bevorzugt, das sich dadurch auszeichnet, dass dieser wenigstens zwei im Wesentlichen parallele, vorzugsweise parallele Platten aufweist. Bei einem bevorzugten Ausführungsbeispiel weist der Flansch genau zwei im Wesentlichen parallele, vorzugsweise parallele Platten auf. Die Platten sind durch stegartige Strukturelemente, insbesondere durch Stege, voneinander beabstandet und miteinander verbunden. Es wird so eine Leichtbaustruktur geschaffen, bei welcher die Steifigkeit insbesondere durch die Stege bewirkt wird, welche die beiden Platten miteinander verbinden. Die erste Bohrung des Flanschs erstreckt sich vorzugsweise senkrecht zu den Platten. Insbesondere erstreckt sich die erste Bohrung bevorzugt durch die Platten hindurch und zwischen den Platten durch eine im Wesentlichen zylindrische, vorzugweise zylindrische erste Durchgangsstruktur. Die beiden Platten werden dabei auch durch die Durchgangsstruktur beabstandet und miteinander verbunden. Bevorzugt ist der Flansch außerhalb der Durchgangsstruktur und der stegartigen Strukturelemente ausgespart, weist also außerhalb von deren Bereichen kein Material auf. Hierdurch ist er zugleich leicht und steif ausgebildet. Die stegartigen Strukturelemente verhindern besonders wirksam eine Durchbiegung des Flanschs.

Es wird auch ein Ausführungsbeispiels des Flanschs bevorzugt, das sich dadurch auszeichnet, dass dieser eine zweite Bohrung, insbesondere eine Durchgangsbohrung oder eine Gewindebohrung, zur Aufnahme eines Befestigungsmittels, vorzugsweise einer Schraube, aufweist. Mithilfe des Befestigungsmittels sind zwei Flansche einer Flanschverbindungsanordnung miteinander verbindbar beziehungsweise aneinander befestigbar. Die zweite Bohrung erstreckt sich vorzugsweise - insbesondere senkrecht zu den Platten - durch die Platten des Flansches und zwischen den Platten durch eine im Wesentlichen zylindrische, vorzugsweise zylindrische zweite Durchgangsstruktur. Ist die zweite Bohrung als Gewindebohrung ausgebildet, ist bevorzugt auch das Gewinde in der zweiten Durchgangsstruktur ausgebildet. Es ist aber auch möglich, dass eine Gewindehülse in die zweite Durchgangsstruktur eingebracht und in dieser gehalten ist. Eine entsprechende Befestigung mithilfe einer Schraube ist besonders einfach und effizient herstellbar, wobei sie zugleich sehr betriebssicher ist.

Es wird auch ein Ausführungsbeispiel des Flanschs bevorzugt, das sich dadurch auszeichnet, dass die zweite Bohrung mittig an dem Flansch angeordnet ist, wobei der Kontaktbereich in einem äußeren Bereich des Flanschs angeordnet ist. Ein die zweite Bohrung umgebender, innerer Bereich des Flanschs ist frei von einer Kontaktfläche. In diesem Bereich ist also Material freigestellt, sodass der Flansch den anderen Flansch der Flanschverbindungsanordnung nur einerseits in einem Dichtbereich und andererseits in dem äußeren Kontaktbereich berührt. Dabei ist der Kontaktbereich vorzugsweise symmetrisch, besonders bevorzugt von der zweiten Bohrung aus gesehen symmetrisch zu der ersten Bohrung oder zu einem Vorsprung oder einer Ausnehmung, der/die die erste Bohrung umgreift, insbesondere also symmetrisch zu dem Dichtbereich in dem äußeren Bereich des Flanschs angeordnet. Auf diese Weise kann im Bereich der zweiten Bohrung eine Spannkraft mittig und bevorzugt symmetrisch zwischen dem Dichtbereich einerseits und dem Kontaktbereich andererseits aufgebracht werden, sodass eine sehr dichte Verbindung ohne Verkippen möglich ist.

Bei einem bevorzugten Ausführungsbeispiel ist vorgesehen, dass der Kontaktbereich zwei Teilkontaktflächen aufweist, die bevorzugt durch wenigstens eine Ausnehmung voneinander beabstandet sind, sodass die beiden Teilkontaktflächen zusammen mit dem Dichtbereich ein Stützdreieck bilden. Die zweite Bohrung und mithin in montiertem Zustand eine Spannschraube, ist bevorzugt im Schwerpunkt dieser Dreieckanordnung vorgesehen, wodurch eine besonders dichte und stabile Verbindung verwirklicht wird.

Die Flansche berühren sich nur in dem Dichtbereich - wo sie allerdings durch das Dichtelement voneinander beabstandet sind - und in dem Kontaktbereich, der belastungsgerecht minimiert ist, sodass insgesamt die Gefahr einer Kontaktkorrosion deutlich herabgesetzt ist.

Es wird auch ein Ausführungsbeispiel des Flanschs bevorzugt, das sich dadurch auszeichnet, dass die Kontaktfläche mit einer elektrisch isolierenden Schicht versehen ist. Besonders bevorzugt ist die Kontaktfläche mit einer elektrisch isolierenden Beschichtung versehen. Dies minimiert weiter das Risiko einer Kontaktkorrosion beziehungsweise der Ausbildung eines Lokalelements.

Weist der Flansch ein Leichtmetall oder eine Leichtmetalllegierung auf, ist er ohne weiteres in einem konventionellen Herstellungsverfahren, beispielsweise spanend oder durch Fließpressen oder in einer Kombination dieser Fertigungsverfahren, herstellbar.

Es wird allerdings ein Ausführungsbeispiel der Flanschverbindungsanordnung bevorzugt, das sich dadurch auszeichnet, dass der erste Flansch der Flanschverbindungsanordnung als Flansch nach einem der zuvor beschriebenen Ausführungsbeispiele ausgebildet ist.

Dabei ist besonders bevorzugt vorgesehen, dass der Flansch Stahl, insbesondere rostfreien Stahl, insbesondere Edelstahl, vorzugsweise ferritischen, martensitischen oder austenitischen, insbesondere austenitischen rostfreien Stahl, aufweist oder aus einem der genannten Materialien besteht. In diesem Fall ergeben sich besondere Synergieeffekte, weil der Flansch, welcher aus dem edleren Material besteht, mit einer Leichtbaustruktur versehen ist, wobei Material ausgespart ist, was ohne weiteres möglich ist, da hier kein "Opfermaterial" bereitgestellt werden muss. Außerdem handelt es sich bei den genannten Materialien um das schwerere Material der Flanschverbindungsanordnung, sodass die Ausgestaltung mit einer Leichtbaustruktur entsprechende Gewichtsvorteile und eine signifikante Gewichtsersparnis für die Flanschverbindungsanordnung insgesamt mit sich bringt.

Es zeigt sich aber auch, dass ein Flansch aus Stahl in konventioneller Fertigungsweise aufgrund der niedrigeren Zerspanungsgeschwindigkeit deutlich schwerer herzustellen ist als aus einem Leichtmetallwerkstoff. Hinzu kommt, dass aufgrund der höheren spezifischen Dichte des Stahlwerkstoffs bei einer derartigen Ausgestaltung eine entsprechende Gewichtserhöhung der Klimaverrohrung beziehungsweise des ganzen Klimakreislaufs unvermeidlich scheint. Die Leichtbaustruktur des Flanschs aus rostfreiem Stahl ist aufgrund der komplizierten Geometrie in konventioneller Zerspanungstechnik kaum mit akzeptablen Kosten herzustellen.

Es wird ein Ausführungsbeispiel des Flanschs bevorzugt, das sich dadurch auszeichnet, dass der Flansch hergestellt ist in einem Verfahren ausgewählt aus einer Gruppe bestehend aus einem generativen Fertigungsverfahren, einem additiven Fertigungsverfahren, einem Metallpulverspritzgussverfahren, einem Feingussverfahren, einem Schmiedeverfahren und einem spanenden Fertigungsverfahren. Dabei verwirklichen sich insbesondere bei einem generativen Fertigungsverfahren, einem additiven Fertigungsverfahren, einem Metallpulverspritzgussverfahren, einem Schmiedeverfahren und einem Feingussverfahren die Vorteile einer hohen Abbildegenauigkeit und Oberflächengüte, wobei insbesondere bei einem Metallpulverspritzgussverfahren keine oder nur minimale Nacharbeiten der Konturen und Oberflächen vorgesehen sein müssen. Daher stellt dies eine besonders bevorzugte Herstellungsart für den Flansch dar. Insbesondere lassen sich mithilfe der genannten Verfahren Stahlflansche mit einer geeigneten Leichtbaustruktur ohne weiteres herstellen.

Ein Flansch, der ein Leichtmetall oder eine Leichtmetalllegierung aufweist, kann dagegen bevorzugt mittels eines spanenden Fertigungsverfahrens hergestellt sein, oder alternativ durch Fließpressen, oder durch eine Kombination dieser Fertigungsverfahren. Auch eine Herstellung durch Schmieden ist möglich.

Die Beschreibung des Flanschs einerseits und der Flanschverbindungsanordnung andererseits sind komplementär zueinander insoweit zu verstehen, als Merkmale, welche in Zusammenhang mit der Flanschverbindungsanordnung explizit oder implizit für den ersten Flansch erläutert wurden, bevorzugt einzeln oder miteinander kombiniert Merkmale eines bevorzugten Ausführungsbeispiels des Flanschs sind. Merkmale, die explizit oder implizit in Zusammenhang mit dem Flansch beschrieben wurden, sind bevorzugt einzeln oder miteinander kombiniert Merkmale des ersten Flanschs eines Ausführungsbeispiels der Flanschverbindungsanordnung. Insbesondere weist der erste Flansch der Flanschverbindungsanordnung bevorzugt Stahl auf, wobei er zugleich eine Leichtbaustruktur aufweist. Zugleich weist bevorzugt der zweite Flansch Aluminium oder eine Aluminiumlegierung auf, wobei er vorzugsweise keine Leichtbaustruktur aufweist.

Die Erfindung wird im Folgenden anhand der Zeichnung näher erläutert. Dabei zeigen:
- Figur 1: eine schematische Längsschnittansicht eines Ausführungsbeispiels einer Flanschverbindungsanordnung;
- Figur 2a): eine Detailansicht des Ausführungsbeispiels gemäß Figur 1;
- Figur 2b): eine Detailansicht analog zu Figur 2a eines weiteren Ausführungsbeispiels der Flanschverbindungsanordnung;
- Figur 3a): eine erste Ansicht eines Ausführungsbeispiels eines Flanschs, und
- Figur 3b): eine zweite Ansicht des Ausführungsbeispiels des Flanschs gemäß Figur 3a).

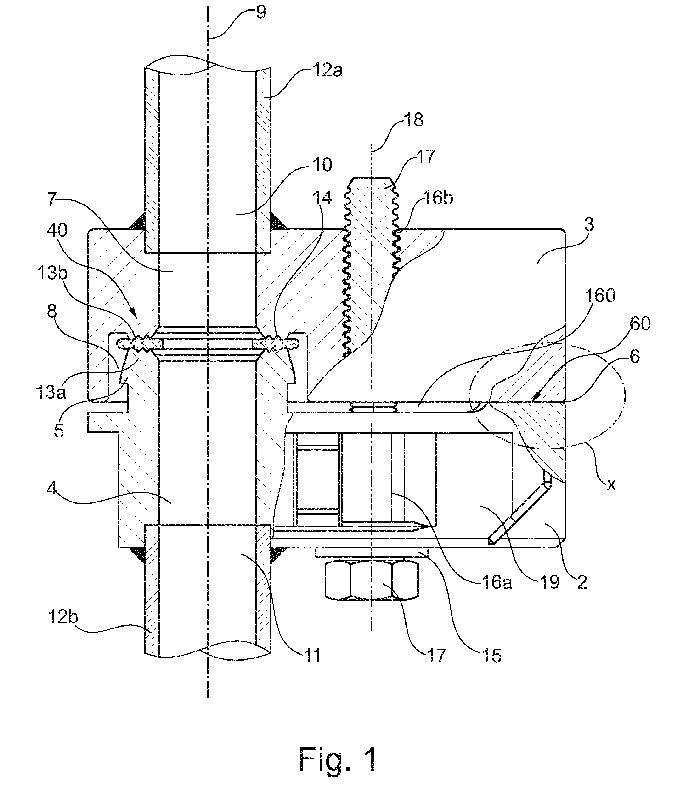

Fig. 1 zeigt eine schematische Längsansicht einer Flanschverbindungsanordnung 1. Eine derartige Flanschverbindungsanordnung 1 dient dem lösbaren Verbinden eines ersten, unter bionischen Aspekten optimierten männlichen Flansches 2 aus rostfreiem Stahl und eines zweiten, konventionellen weiblichen Flansches 3 aus Aluminium oder einer Aluminiumlegierung. Der erste Flansch 2 ist mit einer ersten Bohrung 4 und mit einem diese umgreifenden Vorsprung, nämlich einem Zapfen 5 versehen und besitzt in einem Kontaktbereich 60 eine flächenmäßig minimierte Kontaktfläche 6 mit dem zweiten Flansch 3. Der zweite Flansch 3 besitzt eine erste Bohrung 7 und eine diese umgreifende und den Zapfen 5 aufnehmende Ausnehmung 8. Die erste Bohrung 4 des männlichen Flansches und die erste Bohrung 7 des weiblichen Flansches legen zusammengesetzt einen Leitungskanal mit einer Achse 9 fest, durch den ein Kältemittel, bevorzugt R744 oder ein vergleichbares Kältemittel einer nicht dargestellten Klimaanlage eines Kraftfahrzeuges strömt.

Abweichend von der Darstellung gemäß Figur 1 ist es bei einem anderen Ausführungsbeispiel auch möglich, dass der Leitungskanal innerhalb wenigstens eines der Flansche 2, 3 einen gekrümmten oder gewinkelten Verlauf aufweist. Beispielsweise ist es möglich, dass der Leitungskanal zwei Leitungskanalabschnitte aufweist, die einen Winkel miteinander einschließen, insbesondere einen Winkel von 90°. Die ersten Bohrungen 4, 7 fluchten dann lokal dort miteinander, wo sie in der Flanschverbindungsanordnung 1 aufeinandertreffen.

Der Leitungskanal geht auf beiden Seiten in Aufnahmebohrungen 10 und 11 größeren Durchmessers über, die mit Enden 12a und 12b einer Kältemittelleitung verlötet, verschweißt oder durch ein anderes stoffschlüssiges Verfahren druckdicht verbunden sind. Dabei ist ein erstes Ende 12b einer ersten Kältemittelleitung dem ersten Flansch 2 zugeordnet, wobei ein zweites Ende 12a einer zweiten Kältemittelleitung dem zweiten Flansch 3 zugeordnet ist. Vorzugsweise weist die erste Kältemittelleitung dasselbe Material auf wie der erste Flansch 2, wobei bevorzugt die zweite Kältemittelleitung dasselbe Material aufweist wie der zweite Flansch 3. Auf diese Weise ergibt sich keine Problematik einer Kontaktkorrosion im Bereich des Übergangs zwischen den Flanschen und den ihnen zugeordneten Kältemittelleitungen. Eine Stelle, an der verschiedene Materialien aufeinandertreffen, ist vielmehr in den Bereich der Flansche 2, 3 gelegt, wobei sich die bereits beschriebenen Vorteile ergeben. An anderen Stellen eines Kältemittelkreislaufs, insbesondere einer Klimaanlage eines Kraftfahrzeugs, muss dagegen keine Paarung verschiedener Materialien mehr vorgesehen sein, sodass besonders bevorzugt eine Berührung verschiedener Materialien ausschließlich im Bereich der beiden Flansche 2, 3 gegeben ist. Somit ergeben sich die bereits erwähnten Vorteile.

Bei einem nicht dargestellten Ausführungsbeispiel sind eine oder beide Aufnahmebohrungen 10, 11 direkt mit einem Bauelement, beispielsweise einem Wärmeübertrager, druckdicht verbunden. Alternativ ist es möglich, dass der männliche oder weibliche Flansch 2, 3 Bestandteil eines kältetechnischen Bauelementes ist. Als kältetechnisches Bauelement ist hierbei eine Komponente eines Kältemitteloder Kühlkreislaufes eines Kraftfahrzeuges zu verstehen, beispielsweise ein Expansionsventil, ein Verdampfer, ein Kondensator, ein Heizkörper, ein Kompressor, ein Sammler, ein Gaskühler oder ein innerer Wärmeübertrager.

Dichtflächen 13a, 13b des männlichen Flansches 2 und des weiblichen Flansches 3 werden in einem Dichtbereich 40 durch ein weiches, metallisches Dichtelement 14 abgedichtet, das zwischen den beiden Flanschen eingelegt wird.

Um eine druckdichte Verbindung zwischen dem männlichen und weiblichen Flansch 2, 3 herzustellen, ist die Flanschverbindungsanordnung 1 mit einer Spanneinrichtung versehen. Der erste Flansch 2 weist eine zweite Bohrung 16a auf, die hier als Durchgangsbohrung ausgebildet ist. Der zweite Flansch 3 weist eine zweite Bohrung 16b auf, die hier als Gewindebohrung ausgebildet ist. Es ist eine Spannschraube 17 vorgesehen, welche durch die Durchgangsbohrung 16a des ersten Flanschs 2 durchgesteckt und in die Gewindebohrung 16b des zweiten Flanschs 3 eingeschraubt werden kann. Auf diese Weise können die beiden Flansche 2, 3 miteinander verspannt werden. Bevorzugt ist dabei vorgesehen, dass die Spannschraube 17 mit einer Unterlegscheibe 15 versehen ist.

Es zeigt sich, dass eine Achse 18 der miteinander fluchtenden zweiten Bohrungen 16a, 16b der beiden Flansche 2, 3 parallel zu der Achse 9 der ersten Bohrungen 4, 7 und somit auch des Leitungskanals erstreckt, wobei sie von diesen seitlich versetzt angeordnet ist. Dabei ist sie insbesondere bevorzugt mittig zwischen der Achse 9 und/oder dem Dichtbereich 40 und der Kontaktfläche 6 in dem Kontaktbereich 60 angeordnet, besonders bevorzugt in einem durch diese Bereiche definierten Schwerpunkt. Auf diese Weise ist eine symmetrische Einleitung von Spannkräften in die Flansche 2, 3 mittels der Spannschraube 17 möglich. Ein die zweite Bohrung 16a des ersten Flanschs 2 umgebender, innerer Bereich 160 ist frei von einer Kontaktfläche, mithin ausgespart, sodass hier jedenfalls das Risiko einer Kontaktkorrosion zwischen den Flanschen 2, 3 nicht besteht.

Werden die beiden Flansche 2, 3 mittels der Spannschraube 17 gegeneinander gedrängt, werden bevorzugt symmetrische Kräfte einerseits in das Dichtelement 14 und andererseits in die Kontaktfläche 6 eingeleitet. Das Dichtelement 14 wird dabei über vorzugsweise ringförmig ausgebildete Dichtlippen des männlichen Flansches 2 und des weiblichen Flansches 3 so verformt, dass eine gasdichte Verbindung entsteht.

In einem nicht dargestellten Ausführungsbeispiel sind die beiden Flansche 2, 3 durch eine Überwurfmutter verspannt. Die Überwurfmutter wird dazu mittels eines Innengewindes auf ein Außengewinde eines der beiden Flansche aufgeschraubt.

Aufgrund der bionischen Geometrieoptimierung des ersten Flansches 2 und insbesondere durch auf der Grundlage der bionischen Geometrieoptimierung eingebrachte Verstrebungen 19 in Belastungsrichtung, ist trotz der minimierten Kontaktfläche 6 und der mit der bionischen Geometrieoptimierung verbundenen Gewichts- und Bauraumreduzierung ein unzulässiges Verbiegen des Flanschs insbesondere im Bereich der Spannkrafteinleitung, mithin in dem die zweite Bohrung 16a umgebenden inneren Bereich 160, nicht möglich. Daher kann hier ohne Nachteile auf Material verzichtet und eine entsprechende Freistellung verwirklicht werden. Dies ist umso mehr möglich, da das edlere Material des ersten Flanschs 2 nicht als Opfermaterial vorgehalten werden muss.

Es versteht sich, dass es sich bei dem dargestellten Ausführungsbeispiel nur um eine konkrete Realisierung der erfindungsgemäßen Flanschverbindungsanordnung 1 handelt. Insbesondere ist es abweichend von der konkreten Darstellung möglich, dass der erste Flansch 2 als weiblicher Flansch ausgebildet ist, wobei der zweite Flansch 3 als männlicher Flansch ausgebildet ist. Es ist also insbesondere nicht zwingend erforderlich, dass der männliche Flansch Stahl aufweist und bionisch optimiert ist, sondern es ist genauso möglich, dass der männliche Flansch Aluminium aufweist und in diesem Fall bevorzugt nicht bionisch optimiert ist, wobei der weibliche Flansch Stahl aufweist und bionisch optimiert ist.

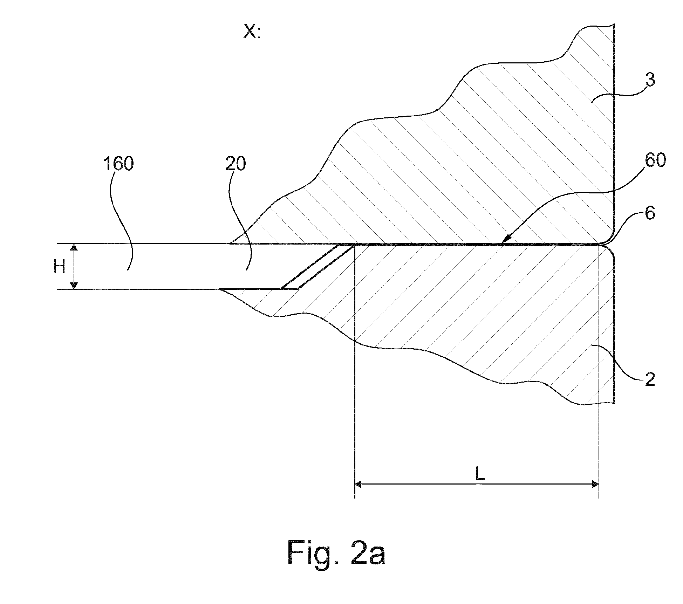

**Fig. 2a****)** zeigt eine Detailansicht der flächenmäßig minimierten Kontaktfläche 6 gemäß Fig. 1 mit einer Länge L in Längsrichtung des ersten Flanschs 2. Gleiche und funktionsgleiche Elemente sind mit gleichen Bezugszeichen versehen, sodass insofern auf die vorangegangene Beschreibung verwiesen wird. Ein Spalt 20, der sich zwischen dem männlichen und weiblichen Flansch 2, 3 nach dem Zusammenpressen außerhalb des Kontaktbereichs 60, nämlich außerhalb der Kontaktfläche 6 und insbesondere in dem inneren Bereich 160 einstellt, hat dabei eine Höhe H, die so bemessen ist, dass keine elektrochemische Kontaktkorrosion entstehen kann und auch etwaig während des Betriebs eindringendes Medium direkt wieder abfließt und deshalb nicht als Elektrolyt für eine elektrochemische Kontaktkorrosion fungieren kann. Die flächenmäßig minimierte Kontaktfläche 6 ist dabei konstruktiv so angeordnet, dass sie einen möglichst großen, insbesondere einen größtmöglichen Abstand zum druckführenden Leitungskanal mit der Achse 9 hat, so dass bei einer lokalen Wandstärkenreduzierung an der Kontaktfläche 6 durch auftretende elektrochemische Kontaktkorrosion keinesfalls die drucktragende Wirkung der Flanschverbindung beeinträchtigt wird.

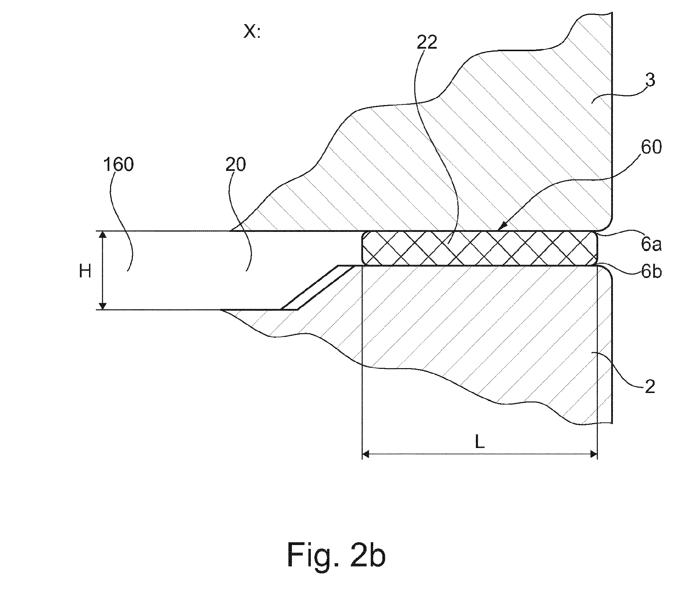

**Fig. 2b****)** zeigt eine Detailansicht einer Dichtungsanordnung eines weiteren Ausführungsbeispiels gemäß der vorliegenden Erfindung. Gleiche und funktionsgleiche Elemente sind mit gleichen Bezugszeichen versehen, sodass insofern auf die vorangegangene Beschreibung verwiesen wird. In diesem Ausführungsbeispiel wurde zwischen zwei sich gegenüberliegenden Kontaktflächen 6a und 6b der Flansche 2, 3 eine elektrisch isolierende Zwischenlage 22 eingebracht, die beispielsweise aus einem zusätzlichen Bauteil - insbesondere aus einem Kunststoffmaterial - bestehen kann, wobei es sich auch um eine elektrisch isolierende Beschichtung handeln kann, die auf eine oder auf beide der Kontaktflächen 6a, 6b aufgebracht wurde. Durch die Einbringung dieser Zwischenlage 22 kann das Auftreten einer elektrochemischen Kontaktkorrosion vermieden werden.

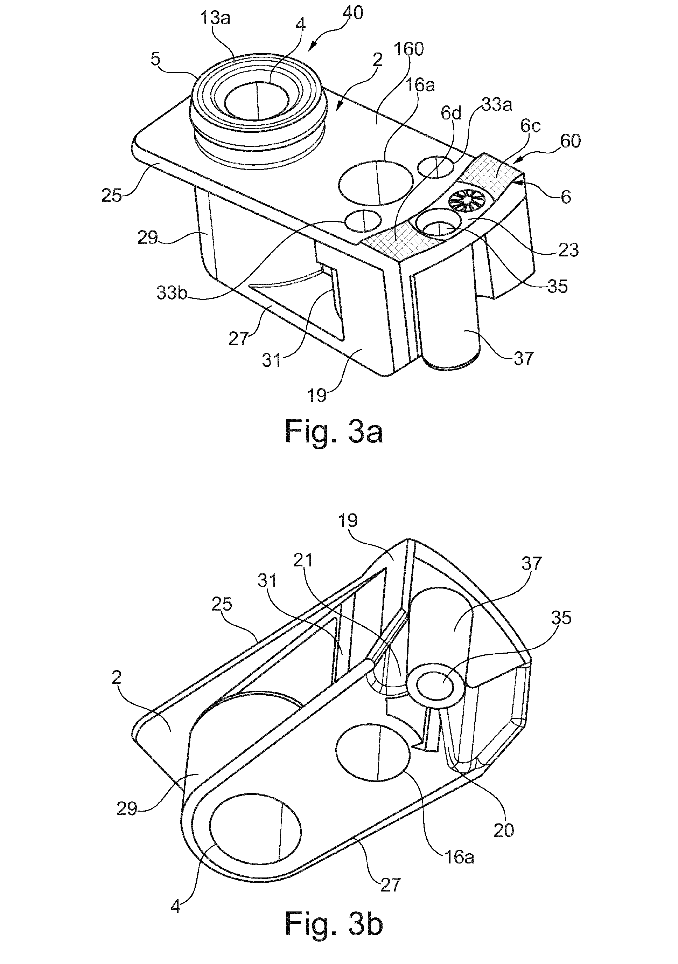

**Fig. 3a****)** zeigt ein Ausführungsbeispiel eines unter bionischen Gesichtspunkten geometrie-, bauraum- und gewichtsoptimierten Flansches 2 in der männlichen Ausführung mit einer Kontaktfläche 6, die hier zwei durch eine Ausnehmung 23 voneinander beabstandete Teilkontaktflächen 6c, 6d aufweist, sowie Verstrebungen 19, 20 und 21, die sich in Belastungsrichtung erstrecken. Gleiche und funktionsgleiche Elemente sind mit gleichen Bezugszeichen versehen, sodass insofern auf die vorangegangene Beschreibung verwiesen wird. Trotz der minimierten Kontaktfläche 6 beziehungsweise der durchgeführten Gewichts- und Bauraumoptimierung ist ein unzulässiges Verbiegen des Flansches im Anwendungsfall nicht möglich, was eine gasdichte Verbindung über die gesamte Lebensdauer sichert.

Fig. 3a) zeigt im Übrigen eine erste Ansicht des Flanschs 2 von schräg oben. Dabei wird deutlich, dass der Flansch 2 hier genau zwei parallele Platten, nämlich eine erste, obere Platte 25 und eine zweite, untere Platte 27 aufweist, welche in Richtung der in Figur 1 dargestellten Achse 9 der ersten Bohrung 4 voneinander beabstandet sind. Zwischen den Platten 25, 27 sind stegartige Strukturelemente, hier nämlich die Verstrebungen 19, 20, 21 vorgesehen, deren Verlauf in Hinblick auf eine zu erwartende Belastung des Flanschs 2 optimiert ist. Dabei zeigt sich insbesondere, dass das Material des Flanschs 2 in höherbelasteten Bereichen oder in Bereichen von Lastpfaden, insbesondere am Ort der Verstrebungen 18, 20, 21 konzentriert ist, wobei weniger belastete Bereiche ausgespart sind, sodass diese insbesondere kein Material aufweisen.

Die erste Bohrung 4 erstreckt sich durch die Platten 25, 27. Sie erstreckt sich außerdem zwischen den Platten durch eine zylindrische, erste Durchgangsstruktur 29. Auch die zweite Bohrung 16a erstreckt sich durch die Platten 25, 27. Zwischen den Platten 25, 27 erstreckt sie sich durch eine im Wesentlichen zylindrische, zweite Durchgangsstruktur 31.

Es zeigt sich, dass die zweite Bohrung 16a hier mittig in Bezug auf einerseits die erste Bohrung 4 und dem Dichtbereich 40 und andererseits die Teilkontaktflächen 6c, 6d und den Kontaktbereich 60 angeordnet ist. Insbesondere bildet sie bevorzugt den Schwerpunkt eines aus der Dichtfläche 13a des Zapfens 5 und den Teilkontaktflächen 6c, 6d gebildeten Kräftedreiecks, wodurch eine besonders sichere, stabile und dichte Befestigung des Flansches 2 an einem anderen Flansch, insbesondere an dem zweiten Flansch 3, möglich ist.

Seitlich von der zweiten Bohrung 16a sind hier zwei Orientierungsbohrungen 33a, 33b angeordnet, die einer Verwechslungssicherung bei der Montage des Flanschs 2 dienen. Dabei wird vorzugsweise in eine der beiden Orientierungsbohrungen 33a, 33b auf einer Fertigungslinie für die Kältemittelleitung ein Pin eingesetzt, welcher der Verwechslungssicherung dient und bei der Montage in eine entsprechende Orientierungsbohrung des zweiten Flanschs 3 eingreift. Je nach geplantem Zusammenbau wird dabei der Pin entweder in die Orientierungsbohrung 33a oder in die Orientierungsbohrung 33b eingesetzt. Es ist auch möglich, dass der Flansch 2 nur eine außermittig angebrachte Orientierungsbohrung 33a, 33b aufweist. Dies hat aber den Nachteil, dass der Flansch 2 dann nicht als Gleichteil gefertigt und bereitgestellt werden kann. Der in Figur 3a) dargestellte Flansch kann dagegen als Gleichteil hergestellt werden, wobei seine genaue Verwendung mit dem Einsetzen des Pins in genau eine der beiden Orientierungsbohrungen 33a, 33b festgelegt wird.

Im Bereich der Ausnehmung 23 ist noch eine Passstiftbohrung 35 angeordnet, die sich bevorzugt in einer dritten im Wesentlichen zylindrischen, vorzugsweise zylindrischen Durchgangsstruktur 37 fortsetzt. In die Passstiftbohrung 35 ist bestimmungsgemäß bevorzugt ein Passstift einsetzbar, welcher der lagegenauen Relativanordnung der Flansche 2, 3 dient, wobei er in eine entsprechende Passstiftbohrung des zweiten Flanschs 3 eingreift.

**Fig. 3b****)** zeigt eine zweite Ansicht des Flanschs 2 gemäß Figur 3a) in einer Ansicht von schräg unten. Gleiche und funktionsgleiche Elemente sind mit gleichen Bezugszeichen versehen, sodass insofern auf die vorangegangene Beschreibung verwiesen wird. Hier sind noch einmal die beiden Platten 25, 27 erkennbar, welche durch die Verstrebungen 19, 20, 21 miteinander verbunden und voneinander beabstandet sind. Außerdem sind die Durchgangsstrukturen 29, 31, 37 dargestellt.

Zusammenfassend kann gesagt werden, dass die durch bionische Überlegungen gefundene Geometrieoptimierung des Flanschpartners aus rostfreiem Stahl ein signifikant verbessertes Korrosionsverhalten einer Flanschverbindung für Kältemittelleitungen in der Materialpaarung aus Aluminium bzw. einer Aluminiumlegierung einerseits und einer rostfreien Stahllegierung anderseits bei gleichzeitiger Gewichts- und Bauraumminimierung und wettbewerbsfähigen Herstellkosten erreicht werden kann.

Nach allem betrifft die Erfindung gemäß den folgenden Punkten eine:
1. Flanschpaarung für Kältemittelleitungen, umfassend eine erste Bohrung und eine ein Dichtelement aufnehmende zweite Bohrung und einen Zapfen, wobei die beiden Flansche aus einer Materialpaarung aus Aluminium bzw. einer Aluminiumlegierung einerseits und einer rostfreien Stahllegierung anderseits bestehen und einen flächenmäßig minimierten Kontaktbereich aufweisen, deren Fläche zwischen 10 und 150 mm² groß ist; einen
2. männlichen oder weiblichen Flansch aus einer rostfreien Stahllegierung nach Punkt 1, wobei in Belastungsrichtung aufgebrachte Verstrebungen einen minimalen Materialeinsatz bei gleichzeitig ausreichender Festigkeit und Dichtheit der Verbindung ermöglichen; eine
3. Flanschpaarung nach einem oder mehreren der Punkte 1 und 2, wobei im Kontaktbereich zwischen dem männlichen und weiblichen Flansch eine elektrisch isolierende Zwischenlage eingebracht ist; eine
4. Flanschpaarung nach einem oder mehreren der Punkte 1 bis 3, wobei im Kontaktbereich der männliche und/oder weibliche Flansch mit einer elektrisch isolierenden Beschichtung versehen ist; einen
5. männlichen oder weiblichen Flansch aus einer rostfreien Stahllegierung nach einem oder mehreren der vorhergehenden Punkte 1 bis 4, wobei er durch ein Metallpulverspritzgussverfahren hergestellt wird; einen
6. männlichen oder weiblichen Flansch aus einer rostfreien Stahllegierung nach einem oder mehreren der Punkte 1 bis 5, wobei er durch ein Feingussverfahren hergestellt wird; einen
7. männlichen oder weiblichen Flansch aus einer rostfreien Stahllegierung nach einem oder mehreren der vorhergehenden Punkte 1 bis 6, wobei er durch ein additives Fertigungsverfahren hergestellt wird, und einen
8. männlichen oder weiblichen Flansch aus einer rostfreien Stahllegierung nach einem oder mehreren der Punkte 1 bis 7, wobei er durch ein spanendes Fertigungsverfahren hergestellt wird.

## Patentansprüche

1. Flanschverbindungsanordnung für eine Kältemittelleitung, mit einem ersten Flansch und einem zweiten Flansch, wobei der erste Flansch ein erstes Material aufweist, wobei der zweite Flansch ein zweites Material aufweist, wobei das erste Material und das zweite Material voneinander verschieden sind, und wobei sich das erste Material und das zweite Material insbesondere in ihrem elektrochemischen Potential derart unterscheiden, dass sie ein elektrochemisches Lokalelement miteinander bilden.

2. Flanschverbindungsanordnung nach Anspruch 1, **dadurch gekennzeichnet, dass** der erste Flansch Stahl, insbesondere rostfreien Stahl, insbesondere Edelstahl, vorzugsweise ferritischen Stahl, martensitischen Stahl oder austenitischen Stahl, insbesondere austenitischen rostfreien Stahl, aufweist, wobei der erste Flansch bevorzugt aus einem der genannten Materialien besteht, und/oder dass der zweite Flansch ein Leichtmetall oder eine Leichtmetalllegierung, insbesondere Aluminium oder eine Aluminiumlegierung, aufweist, wobei er bevorzugt aus einem der genannten Materialien besteht.

3. Flanschverbindungsanordnung einem der vorhergehenden Ansprüche, **dadurch gekennzeichnet, dass** der erste Flansch und der zweite Flansch in einem Kontaktbereich aneinander anliegen, wobei der Kontaktbereich einen belastungsgerecht minimierten Flächeninhalt, insbesondere von mindestens 10 mm² bis höchstens 150 mm², vorzugsweise von mindestens 25 mm² bis höchstens 100 mm², vorzugsweise von mindestens 35 mm² bis höchstens 75 mm², besonders bevorzugt von 50 mm², aufweist.

4. Flanschverbindungsanordnung nach einem der vorhergehenden Ansprüche, **dadurch gekennzeichnet, dass** der zweite Flansch eine erste Bohrung zur Durchleitung von Kältemittel aufweist, die mit einer ersten Bohrung des ersten Flanschs zur Durchleitung von Kältemittel fluchtet, wobei der zweite Flansch bevorzugt eine zweite Bohrung, insbesondere eine Durchgangsbohrung oder eine Gewindebohrung, zur Aufnahme eines Befestigungsmittels, vorzugsweise einer Schraube, aufweist, die mit einer zweiten Bohrung des ersten Flanschs, insbesondere einer Durchgangsbohrung oder einer Gewindebohrung, zur Aufnahme eines Befestigungsmittels, vorzugsweise einer Schraube, fluchtet.

5. Flanschverbindungsanordnung nach einem der vorhergehenden Ansprüche, **dadurch gekennzeichnet, dass** der erste Flansch einen die erste Bohrung umgreifenden Vorsprung oder eine die erste Bohrung umgreifende Ausnehmung, insbesondere eine die erste Bohrung umgreifende Ringnut, aufweist, wobei der zweite Flansch eine dessen erste Bohrung umgreifende Ausnehmung, insbesondere eine Ringnut, oder einen die erste Bohrung umgreifenden Vorsprung aufweist, wobei der Vorsprung des ersten Flanschs in die Ausnehmung des zweiten Flanschs eingreift, oder wobei der Vorsprung des zweiten Flanschs in die Ausnehmung des ersten Flanschs eingreift.

6. Flanschverbindungsanordnung nach einem der vorhergehenden Ansprüche, **dadurch gekennzeichnet, dass** in der Ausnehmung, welche die erste Bohrung des ersten oder des zweiten Flanschs umgreift, ein Dichtelement angeordnet ist.

7. Flanschverbindungsanordnung nach einem der vorhergehenden Ansprüche, **dadurch gekennzeichnet, dass** zwischen dem ersten Flansch und dem zweiten Flansch in dem Kontaktbereich eine elektrisch isolierende Zwischenlage angeordnet ist, wobei vorzugsweise zumindest einer der Flansche an einer Kontaktfläche zu dem anderen Flansch eine elektrisch isolierende Schicht, insbesondere eine elektrisch isolierende Beschichtung, aufweist.

8. Flansch für eine Verbindungsstelle in einer Kältemittelleitung, insbesondere für eine Flanschverbindungsanordnung nach einem der Ansprüche 1 bis 7, mit einer ersten Bohrung zur Durchleitung eines Kältemittels, **dadurch gekennzeichnet, dass** an dem Flansch eine Kontaktfläche zur Anlage an einem weiteren Flansch einer Flanschverbindungsanordnung ausgebildet ist, wobei die Kontaktfläche einen belastungsgerecht minimierten Flächeninhalt, insbesondere von mindestens 10 mm² bis höchstens 150 mm², vorzugsweise von mindestens 25 mm² bis höchstens 100 mm², vorzugsweise von mindestens 35 mm² bis höchstens 75 mm², besonders bevorzugt von 50 mm², aufweist.

9. Flansch nach Anspruch 8, **dadurch gekennzeichnet, dass** der Flansch eine Leichtbaustruktur, insbesondere eine bionische Struktur, bevorzugt eine profilierte Struktur oder eine Fachwerkstruktur aufweist.

10. Flansch nach einem der Ansprüche 8 und 9, **dadurch gekennzeichnet, dass** das Material des Flansches in höher belasteten Bereichen oder in Bereichen von Lastpfaden konzentriert ist, wobei bevorzugt wenigstens ein geringer belasteter Bereich ausgespart ist, insbesondere kein Material aufweist, und/oder dass der Flansch wenigstens eine sich in einer Belastungsrichtung erstreckende Verstrebung aufweist.

11. Flansch nach einem der vorhergehenden Ansprüchen 8 bis 10, **dadurch gekennzeichnet, dass** der Flansch wenigstens zwei, vorzugsweise genau zwei im Wesentlichen parallele, vorzugsweise parallele Platten aufweist, die durch stegartige Strukturelemente, insbesondere Stege, voneinander beabstandet und miteinander verbunden sind, wobei sich die erste Bohrung vorzugsweise durch die Platten und zwischen den Platten durch eine im Wesentlichen zylindrische, vorzugsweise zylindrische erste Durchgangsstruktur erstreckt.

12. Flansch nach einem der vorhergehenden Ansprüchen 8 bis 11, **dadurch gekennzeichnet, dass** der Flansch eine zweite Bohrung, insbesondere eine Durchgangsbohrung oder eine Gewindebohrung, zur Aufnahme eines Befestigungsmittels, vorzugsweise einer Schraube, aufweist, wobei sich die zweite Bohrung vorzugsweise durch die Platten des Flansches und zwischen den Platten durch eine im Wesentlichen zylindrische, vorzugsweise zylindrische zweite Durchgangsstruktur erstreckt.

13. Flansch nach einem der vorhergehenden Ansprüche 8 bis 12, **dadurch gekennzeichnet, dass** die zweite Bohrung mittig an dem Flansch angeordnet ist, wobei der Kontaktbereich - vorzugsweise symmetrisch, besonders bevorzugt von der zweiten Bohrung aus gesehen symmetrisch zu der ersten Bohrung oder zu einem Vorsprung oder einer Ausnehmung, der/die die erste Bohrung umgreift-in einem äußeren Bereich des Flanschs angeordnet ist, wobei ein die zweite Bohrung umgebender, innerer Bereich des Flanschs frei von einer Kontaktfläche ist.

14. Flansch nach einem der vorhergehenden Ansprüchen 8 bis 13, **dadurch gekennzeichnet, dass** die Kontaktfläche mit einer elektrisch isolierenden Schicht, vorzugsweise einer elektrisch isolierenden Beschichtung, versehen ist.

15. Flansch nach einem der vorhergehenden Ansprüchen 8 bis 14, **dadurch gekennzeichnet, dass** der Flansch hergestellt ist in einem Verfahren ausgewählt aus einer Gruppe bestehend aus einem generativen Fertigungsverfahren, einem additiven Fertigungsverfahren, einem Metallpulverspritzgussverfahren, einem Feingussverfahren, einem Schmiedeverfahren und einem spanenden Fertigungsverfahren.

16. Flanschverbindungsanordnung nach einem der Ansprüche 1 bis 7, **dadurch gekennzeichnet, dass** der erste Flansch als Flansch nach einem der Ansprüche 8 bis 15 ausgebildet ist.
